# EUROPÄISCHE PATENTANMELDUNG

(11) **EP 1 158 492 A1**
(43) Veröffentlichungstag der Anmeldung: **28.11.2001**
(21) Anmeldenummer: 00810449.9
(22) Anmeldetag: 23.05.2000
(51) Int. Cl.: G10L 17/00

(54) **Benutzerauthentifizierung beim Telebanking**

(71) Anmelder: Ascom Systec AG, 5506 Mägenwil (CH)
(72) Erfinder: Kunz, Gunnar, 5442 Fislisbach (CH)
(74) Vertreter: Roshardt, Werner Alfred, Dipl.-Phys.

(57) **Zusammenfassung**

Zur Authentifizierung eines Benutzers (6), der über ein Kommunikationsgerät (2) auf vertrauliche Daten oder Bereiche einer Datenverarbeitungsvorrichtung (1) zugreifen möchte, erzeugt die Datenverarbeitungsvorrichtung nach dem Verbindungsaufbau (7) durch den Benutzer eine zufällige Zeichenfolge (10), welche sie ans Kommunikationsgerät schickt. Dieses zeigt dem Benutzer die Zeichenfolge auf einem Display an, von wo sie der Benutzer abliest und durch Nachsprechen (12) eine Sprachsequenz (13) erzeugt, welche vom κommunikationsgerät an die Datenverarbeitungsvorrichtung zurückgeschickt wird. Anhand der Sprachsequenz führt die Datenverarbeitungsvorrichtung eine textunabhängige Sprechererkennung sowie eine sprecherunabhängige Texterkennung durch. Werden sowohl der Benutzer, als auch die zurückgesandte Zeichenfolge als korrekt erkannt, wird dem Benutzer der Zugang zu den gewünschten Daten bzw. Bereichen gewährt.

## Beschreibung

### Technisches Gebiet

Die Erfindung betrifft ein Verfahren zur Authentifizierung eines Benutzers eines Kommunikationsgerätes für einen Zugriff auf vertrauliche Daten bzw. Bereiche einer Datenverarbeitungsvorrichtung.

### Stand der Technik

Der Zugriff auf vertrauliche Bereiche bzw. Daten via Computer und Telefonleitung, beispielsweise beim sogenannten Home- oder Telebanking, ist bekannt. Hierbei meldet sich der Benutzer beim Telebanking-System mit einer Kennung (z.B. sein Name oder eine Nummer) und einem geheimen Passwort an. Für den Fall, dass das Passwort, vom Benutzer meist unbemerkt, von anderen Personen ausspioniert oder sonst wie in Erfahrung gebracht wurde, d.h. nicht mehr geheim ist, ist eine weitere Sicherheitsstufe eingebaut. Diese wird realisiert, indem der Benutzer beim Anmelden nebst der Kennung (im folgenden ID genannt) und Passwort jeweils einen Code eingibt, der bei jedem Anmeldevorgang wechselt. Damit der Benutzer weiss, welcher Code als nächster an der Reihe ist, sendet ihm die Bank beispielsweise via Briefpost eine Liste mit einer Anzahl solcher Codes, wobei der Benutzer beim ersten Anmelden den ersten Code, beim zweiten Anmelden den zweiten Code, usw. verwendet. Damit er nicht vergisst, welcher Code als nächster an der Reihe ist, streicht er den jeweils verwendeten Code durch, weshalb solche Code-Listen auch Streichlisten genannt werden.

Dieses Vorgehen birgt jedoch gewisse Risiken, da die Streichliste ständig unter Verschluss gehalten werden muss. Noch riskanter und umständlicher ist es für Benutzer, welche eine Dienstleistung wie das Telebanking von einem mobilen Terminal, beispielsweise einem Mobilfunktelefon aus in der Öffentlichkeit nutzen möchten. Entweder muss der Benutzer die Streichliste ständig bei sich tragen, was die Gefahr eines Verlustes, eines Diebstahls oder eines Ausspionierens der Streichliste markant erhöht, oder er muss sie gar auswendig lernen. Zudem besteht ein hohes Sicherheitsrisiko bei der Übermittlung der Streichliste an den Benutzer, wenn sich dieser an einem Ort mit unsicheren Postverbindungen aufhält.

### Darstellung der Erfindung

Aufgabe der Erfindung ist es, ein Verfahren der oben erwähnten Art anzugeben, welches auf einfache und sichere Art den Zugriff auf vertrauliche Bereiche einer Datenverarbeitungsvorrichtung ermöglicht.

Die Lösung der Aufgabe ist durch die Merkmale des Anspruchs 1 definiert. Gemäss der Erfindung erfolgt die Authentifizierung eines Benutzers eines Kommunikationsgerätes beim Zugriff auf vertrauliche Daten bzw. Bereiche einer Datenverarbeitungsvorrichtung, indem die Datenverarbeitungsvorrichtung eine zufällige Zeichenfolge generiert und diese über einen beliebigen Übermittlungskanal an den Benutzer übermittelt. Der Benutzer wiederum baut mit seinem Kommunikationsgerät eine Verbindung zur Datenverarbeitungsvorrichtung auf und generiert durch Nachsprechen der von der Datenverarbeitungsvorrichtung an ihn übermittelten Zeichenfolge eine Sprachsequenz, welche über diese Verbindung zur Datenverarbeitungsvorrichtung übermittelt wird. Die Datenverarbeitungsvorrichtung authentifiziert den Benutzer schliesslich anhand der übermittelten Sprachsequenz.

Bei dem Kommunikationsgerät handelt es sich beispielsweise um ein Digital-Telefon (ISDN, DECT), einen Computer mit einem Telefon-Adapter (Analog-Modem, ISDN-Karte, etc.) oder um ein modernes Mobilfunktelefon, welches z.B. über die WAP (wireless application protocol) - Funktionalität verfügt und mit welchem über das Internet eine Verbindung zu einer Bank aufgebaut werden kann.

Die Datenverarbeitungsvorrichtung wird im Allgemeinen von einem oder mehreren vernetzten Computern gebildet, weshalb die Datenverarbeitungsvorrichtung im folgenden als Computersystem bezeichnet wird.

Dieses Vorgehen ermöglicht eine sichere Authentifizierung des Benutzers bei einer denkbar einfachen Handhabung. Das Computersystem übermittelt die zufällige Zeichenfolge einfach an den Benutzer, beispielsweise über eine Telefon- oder Datenverbindung direkt auf dessen Mobilfunktelefon, welches ihm die übermittelte Zeichenfolge auf dem Display anzeigt. Danach muss der Benutzer die auf dem Display angezeigte Zeichenfolge nur noch nachsprechen. Er ist nicht mehr darauf angewiesen, sich die entsprechenden Zeichenfolgen zu merken oder die Streichliste bei sich zu tragen.

Um ein möglichst einfaches Verfahren zu ermöglichen, übermittelt das Computersystem die zufällige, von ihm generierte Zeichenfolge über diejenige Verbindung, welche der Benutzer zum Computersystem selber aufbaut. D.h. das Computersystem generiert die Zeichenfolge erst nachdem der Benutzer die Verbindung aufgebaut und damit seinen Wunsch, auf sensible Daten bzw. Bereiche des Computersystems zuzugreifen oder entsprechende Dienstleistungen in Anspruch zu nehmen, angezeigt hat. Ist die Zeichenfolge generiert, übermittelt sie das Computersystem zum Benutzer über die von diesem aufgebaute Verbindung direkt zu dessen Kommunikationsgerät.

Der Benutzer empfängt die zufällige Zeichenfolge vom Computersystem und spricht sie einfach nach. Auf diese Weise generiert der Benutzer eine Sprachsequenz, welche wiederum an das Computersystem übermittelt wird. Je nach Art der Verbindung erfolgt die Übertragung der Sprachsequenz z.B. analog oder sie wird digitalisiert und als eine bestimmte Anzahl von Datenpaketen zum Computersystem übermittelt. Dieses reproduziert daraus die ursprüngliche Sprachsequenz, welche ihm zur Authentifikation des Benutzers dient. Die Authentifizierung selber erfolgt vorzugsweise in mehreren Modulen unabhängig voneinander. Einerseits wird in einem ersten Modul Benutzerererkennung eine textunabhängige Sprechererkennung durchgeführt.

In einem zweiten Modul Texterkennung wird zudem eine sprecherunabhängige Texterkennung durchgeführt.

Erst wenn beide Prüfungen erfolgreich sind, d.h. wenn sowohl der Benutzer als auch die gesprochene Zeichenfolge als richtig erkannt werden, wird dem Benutzer der Zugriff auf die vertraulichen Daten bzw. Bereiche gewährt.

Der Zugriff auf das Computersystem erfolgt bevorzugt von einem mobilen Funkgerät, beispielsweise einem Mobilfunktelefon, aus. Das Computersystem übermittelt die Zeichenfolge direkt zum Funkgerät, welches die empfangene Zeichenfolge auf dem Display oder über einen Lautsprecher anzeigt bzw. ausgibt. Der Benutzer braucht die Zeichenfolge nur noch in das Mikrofon des Funkgerätes nachzusprechen.

Die Anwendung des Verfahrens bietet vor allem bei unsicheren Netzen wie dem Internet gewisse Vorteile. Wird vom Benutzer beispielsweise eine WAP-Verbindung (WAP = Wireless Application Protocoll), d.h. eine Verbindung von einem WAP-fähigen Mobilfunkgerät über das Internet zum Computersystem aufgebaut, ist ein unerlaubter Zugriff gleich mehrfach abgesichert. Zum Einen wird über Mobilfunkverbindungen im Allgemeinen verschlüsselt kommuniziert. (Dies zusätzlich zu der verwendeten Codierung und der angewendeten Funktechnik, z.B. TDMA = Time Division Multiple Access, welche das Abhören bereits stark erschweren.) Zum Andern muss nicht nur die vom Computersystem aus der empfangenen Sprachsequenz reproduzierte Zeichenfolge mit der gesendeten übereinstimmen, sondern, und das ist das Entscheidende, das Computersystem muss den Benutzer eindeutig anhand der empfangen Sprachsequenz erkennen, und zwar unabhängig vom gesprochenen Text.

Da bei jedem Verbindungsaufbau zum Computersystem überdies eine andere Zeichenfolge übermittelt wird, nützt es einem potentiellen Mithörer auch nichts, frühere Verbindungen abzuhören und eine bereits übermittelte Zeichenfolge zu rekonstruieren oder eine andere Zeichenfolge daraus zu generieren.

Vorzugsweise wird bereits beim Verbindungsaufbau vom Benutzer zum Computersystem ein Sicherheitscheck eingebaut, indem sich der Benutzer mit einem Kennwort und/oder zugehörigem Passwort beim System anmelden muss. Eine weitere Möglichkeit besteht darin, dass ein Anmeldeverfahren benutzt wird, das auf einem public-key Verfahren basiert. Bei diesem Verfahren besitzt der Benutzer einen geheimen Schlüssel (Code), der beispielsweise auf einer SIM-Karte (SIM = Subscriber Identity Module) gespeichert ist, welche wiederum im Mobilfunktelefon des Benutzers steckt. Dieser Schlüssel erlaubt es dem Computersystem, das vom Benutzer verwendete Mobilfunktelefon eindeutig zu identifizieren.

Wie bereits kurz erwähnt, erfolgt die Kommunikation zwischen Benutzer und Computersystem vorzugsweise verschlüsselt, wobei der Einfachheit halber ein Verschlüsselungsverfahren verwendet wird, das auf dem public-key Verfahren basiert. Die hierzu notwendige Ausrüstung, d.h. die SIM-Karte für das Mobilfunkgerät mit dem geheimen Schlüssel des Benutzers, ist in den meisten Fällen nämlich bereits vorhanden. Die Verschlüsselung kann natürlich auch mit einem symmetrischen Verfahren, d.h. unter Verwendung eines beiden Parteien bekannten Sessionkeys, oder mit einer Mischform beider Verfahren erfolgen.

Die Durchführung des Verfahrens erfolgt mit einer Kommunikationsanordnung, welche ein Computersystem und zumindest ein Kommunikationsgerät umfasst. Als Beispiel sei der Zentralrechner einer Bank und ein Mobilfunktelefon genannt, dessen Benutzer bei dieser Bank ein Konto besitzt, das er per Telebanking bewirtschaften (Kontobewegungen, Aktientransaktionen, etc.) möchte.

Um dem Benutzer den Fernzugang zu seinem Konto zu ermöglichen, generiert der Zentralrechner der Bank eine zufällige Zeichenfolge, welche er zum Mobilfunktelefon übermittelt. Das Mobilfunktelefon gibt, z.B. durch Anzeigen auf dem Display oder durch akustische Wiedergabe über den Lautsprecher, die vom Zentralrechner empfangene Zeichenfolge an den Benutzer weiter. Durch Nachsprechen der Zeichenfolge generiert der Benutzer eine Sprachsequenz, welche das Mobilfunktelefon an den Zentralrechner übermittelt. Der Zentralrechner authentifiziert schliesslich den Benutzer, indem er anhand der Sprachsequenz die Identität des Benutzers überprüft.

Das Computersystem, beispielsweise der eben erwähnte Bankrechner, weist einen Zufallsgenerator zur Generierung einer zufälligen Zeichenfolge auf. Alternativ könnte die Zeichenfolge auch extern generiert und entweder direkt an den Benutzer oder an das Computersystem übermittelt und dort wahlweise zwischengespeichert werden. Zur Übermittlung der Zeichenfolge an den Benutzer respektive zum Empfangen der vom Benutzer ausgesendeten Sprachsequenz umfasst es weiter eine Sender- resp. Empfängervorrichtung. Diese bindet das Computersystem in ein Telefon-Festnetz oder ein anderes Übertragungsnetz ein. Zur Benutzer-Identifikation mittels Analyse der empfangenen Sprachsequenz verfügt es ausserdem über eine Erkennungsvorrichtung.

Die Erkennungsvorrichtung ist vorzugsweise aus zwei verschiedenen Modulen aufgebaut. Ein Sprechererkennungsmodul ermöglicht es dem Computersystem, eine textunabhängigen Sprechererkennung durchzuführen. Mit einem weiteren Modul Texterkennung ist zudem eine sprecherunabhängige Texterkennung möglich.

Zur Authentifizierung des Benutzers können selbstverständlich auch weniger als zwei Module verwendet werden. Im Prinzip reicht nämlich ein Sprechererkennungsmodul aus, um den Benutzer sicher zu identifizieren. Damit ein Mithörer in diesem Fall jedoch nicht einfach eine übermittelte Sprachsequenz mitschneiden und später wieder abspielen kann, muss sichergestellt werden, dass der Benutzer jedesmal einen anderen Text spricht. Dies geschieht beispielsweise (wie bereits beschrieben) durch Vorgabe einer bestimmten Zeichenfolge oder durch Befolgen eines zuvor vereinbarten Vorgehens wie z.B. das Aufsagen des aktuellen Datums inklusive Uhrzeit.

Genausogut können auch weitere Erkennungsmodule wie "zusätzliches Passwort erforderlich" oder "Zugriff nur möglich, falls sich gleichzeitig eine zweite Personen korrekt anmeldet und authentifiziert" (analog einer Kollektiv-Unterschrift) verwendet werden.

Ein Kommunikationsgerät zur Durchführung der Erfindung ist in der Lage, bei einer bestehenden Verbindung zum Computersystem Daten von diesem zu empfangen und dem Benutzer auf einem Display anzuzeigen oder auf einem Lautsprecher auszugeben.

Eine bevorzugte Anwendung der Erfindung bietet sich beim "Mobile Banking". Sie kann jedoch auch überall dort angewendet werden, wo der Zugriff auf gewisse, nicht für die Öffentlichkeit bestimmte Daten über ein Kommunikationsgerät nur durch dafür autorisierte Personen erfolgen darf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1 Eine schematische Darstellung einer Kommunikationsanordnung für den Zugriff auf vertrauliche Daten bzw. Bereiche eines Computersystems;
Fig. 2 einen schematisch dargestellten Verfahrensablauf beim Zugriff auf das Computersystem;
Fig. 3 eine schematische Darstellung eines entsprechenden Computersystems;
Fig. 4 eine schematische Darstellung eines für den Zugriff auf das Computersystem verwendbaren Mobilfunktelefons und
Fig. 5 eine schematische Darstellung einer alternativen Ausführung einer Kommunikationsanordnung.

Grundsätzlich sind in den Figuren gleiche Teile mit gleichen Bezugszeichen versehen.

### Wege zur Ausführung der Erfindung

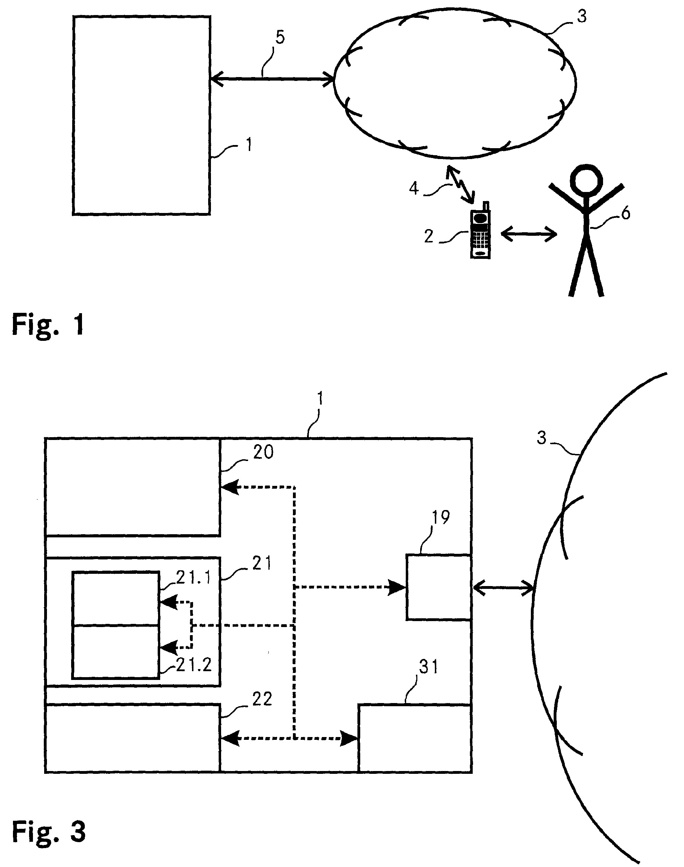

Figur 1 zeigt ein Computersystem 1, ein Mobilfunktelefon 2 sowie ein Übertragungsnetz 3, über welches der Benutzer des Mobilfunktelefons 2 mit dem Computersystem 1 kommunizieren kann. Das Übertragungsnetz 3 besteht in der Regel aus drahtgebundenen sowie drahtlosen Netzabschnitten, wobei durchaus auch rein drahtlose oder rein drahtgebundene Netze benutzt werden können. Im dargestellten Beispiel kommuniziert das Mobilfunktelefon 2 über eine Funkverbindung 4 mit einem drahtlosen Netzabschnitt und das Computersystem 1 über eine Telefonleitung 5 mit einem drahtgebundenen Netzabschnitt des Übertragungsnetzes 3.

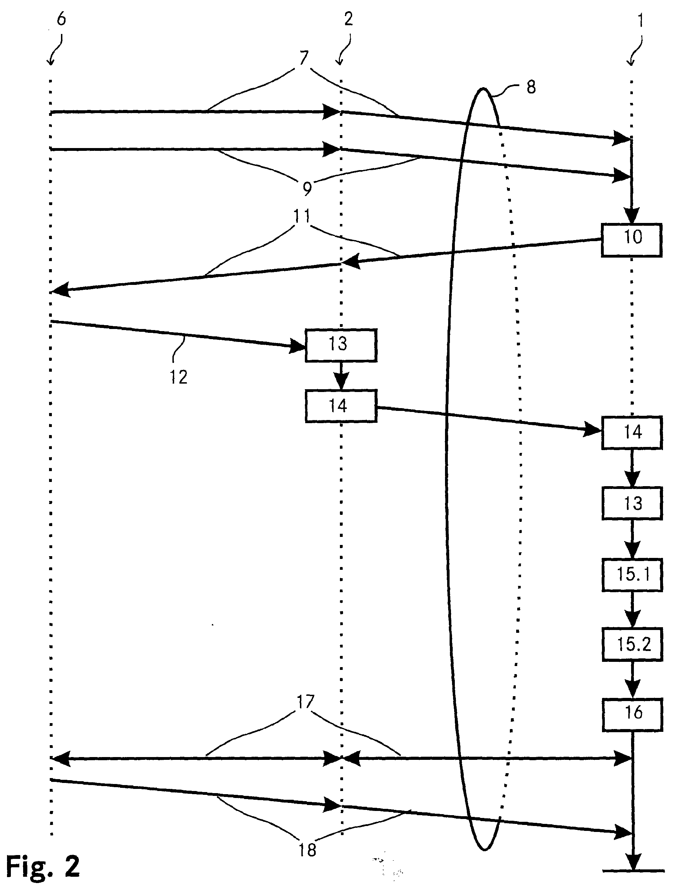

In Figur 2 ist das Verfahren dargestellt, wie es erfindungsgemäss abläuft, wenn der Benutzer 6 mit seinem Mobilfunktelefon 2 auf vertrauliche Daten bzw. Bereiche des Computersystems 1 zugreifen möchte. Auf der linken Seite sind die zwischen dem Benutzer 6 und dem Mobilfunktelefon 2 ausgetauschten Nachrichten bzw. Aktionen und auf der rechten Seite diejenigen zwischen dem Mobilfunktelefon 2 und dem Computersystem 1 dargestellt.

Zunächst meldet der Benutzer 6 seinen Verbindungswunsch 7 beim Mobilfunktelefon 2 an, indem er beispielsweise die entsprechende Telefonnummer des Computersystems 1 eintippt, eine entsprechende Kurzwahl abruft oder über das Internet die entsprechende Seite aufruft. Das Mobilfunktelefon 2 baut daraufhin eine Verbindung 8 zum Computersystem 1 auf. Steht die Verbindung 8, folgt die Anmeldung 9 des Benutzers 6 beim Computersystem 1 mit seiner Kennung (kurz ID genannt) und zugehörigem Passwort. Denkbar ist beispielsweise, dass der Benutzer 6 entsprechende Ziffern und/oder Buchstaben eintippt oder dass das Mobilfunktelefon 2 die Identifizierung des Benutzers 6 automatisch und selbständig mit Hilfe einer im Mobilfunktelefon 2 steckenden SIM-Karte vornimmt.

Das Computersystem 1 erkennt die Absicht des Benutzers 6, auf vertrauliche Daten bzw. Bereiche zugreifen zu wollen und generiert zu diesem Zweck eine zufällige Zeichenfolge 10, welche es über die bestehende Verbindung 8 zum Mobilfunktelefon 2 sendet. In einem Schritt Datenanzeige 11 zeigt dieses die empfangene Zeichenfolge 10 auf dem Display des Mobilfunktelefons 2 an. Daraufhin erzeugt der Benutzer 6 durch Nachsprechen 12 eine analoge Sprachsequenz 13, welche über das Mikrofon ins Mobilfunktelefon 2 gelangt. Um dem Mobilfunktelefon 2 (beispielsweise einem sprachgesteuerten Mobilfunktelefon) oder dem Computersystem 1 anzuzeigen, dass nun gleich das Nachsprechen 12 der Zeichenfolge 10 und nicht die sprachliche Eingabe eines Befehls folgt, kann der Benutzer 6 vor und/oder nach dem Nachsprechen 12 der Zeichenfolge 10 beispielsweise eine bestimmte Taste oder Tastenkombination drücken bzw. sprachgesteuert den entsprechenden Befehl eingeben.

Geht man davon aus, dass die Verbindung 8 eine (digitale) Datenverbindung ist, d.h. die zu übermittelnden Daten beispielsweise digitalisiert und in Form von kleinen Datenpaketen übertragen werden, muss die vom Benutzer 6 erzeugte, analoge Sprachsequenz 13 in eine digitale Sprachsequenz 14 konvertiert werden, bevor sie über die Verbindung 8 an das Computersystem 1 übermittelt werden kann. Allerdings ist eine Datenverbindung keine Voraussetzung für die Anwendung des erfindungsgemässen Verfahrens. Ist die Verbindung 8 z.B. eine analoge Sprechverbindung, entfällt einfach die Konversion der analogen in eine digitale Sprachsequenz. Daneben sind beim Versenden von Nachrichten jedoch weitere Bearbeitungs- bzw. Aufbereitungsschritte wie z.B. eine Codierung oder eine Verschlüsselung möglich.

Bei Mobilfunktelefonen oder anderen Kommunikationsgeräten, welche dem Benutzer gleichzeitig mehr als eine Verbindung zur Verfügung stellen können, können natürlich auch gleichzeitig mehrere Verbindungen zum Computersystem 1 aufgebaut werden. Über eine erste (z.B. digitale) Datenverbindung läuft beispielsweise der Austausch der vertraulichen Daten und über eine zweite (z.B. analoge) Sprechverbindung wird die analoge Sprachsequenz vom Benutzer zum Computersystem übertragen.

Das Computersystem 1 konvertiert die vom Mobilfunktelefon 2 empfangene digitale Sprachsequenz 14 zurück in eine analoge Sprachsequenz 13 und führt anhand dieser analogen Sprachsequenz 13, beispielsweise mittels einer Frequenzanalyse, eine Authentifizierung 15.1 des Sprechers, d.h. des Benutzers 6 des Mobilfunktelefons 2 durch. Des Weiteren wird die analoge Sprachsequenz 13 einer Korrektheitsprüfung 15.2 unterzogen, bei welcher überprüft wird, ob der Inhalt der analogen Sprachsequenz 13 dem Inhalt der Zeichenfolge 10 entspricht.

Wird der Benutzer nicht korrekt authentifiziert oder die analoge Sprachsequenz 13 als verschieden von der Zeichenfolge 10 erkannt, wird entweder die Verbindung 8 abgebrochen oder der Benutzer bekommt eine weitere Chance, sich korrekt zu identifizieren bzw. eine korrekte Sprachsequenz zu übermitteln (beides nicht dargestellt).

Verläuft die Authentifizierung 15.1 des Benutzers 6 sowie die Korrektheitsprüfung 15.2 der analogen Sprachsequenz 13 hingegen erfolgreich, erfolgt durch das Computersystem 1 eine Freigabe 16 des Zugriffs auf die vertraulichen Daten bzw. Bereiche und der Benutzer 6 kann die gewünschten Aktionen 17 durchführen.

Nach Beendigung der Abfragen durch den Benutzer 6 erfolgt (meist durch den Benutzer 6 selber) der Verbindungsabbau 18 der Verbindung 8.

Dargestellt sind in Figur 2 nur die wichtigen Verfahrensschritte. Es ist klar, dass sowohl beim Verbindungsauf- bzw. abbau als auch während der Verbindung viele weitere Nachrichten zwischen dem Mobilfunktelefon 2 und dem Computersystem 1 ausgetauscht werden, welche u.U. auch eine Interaktion des Benutzers 6 erfordern.

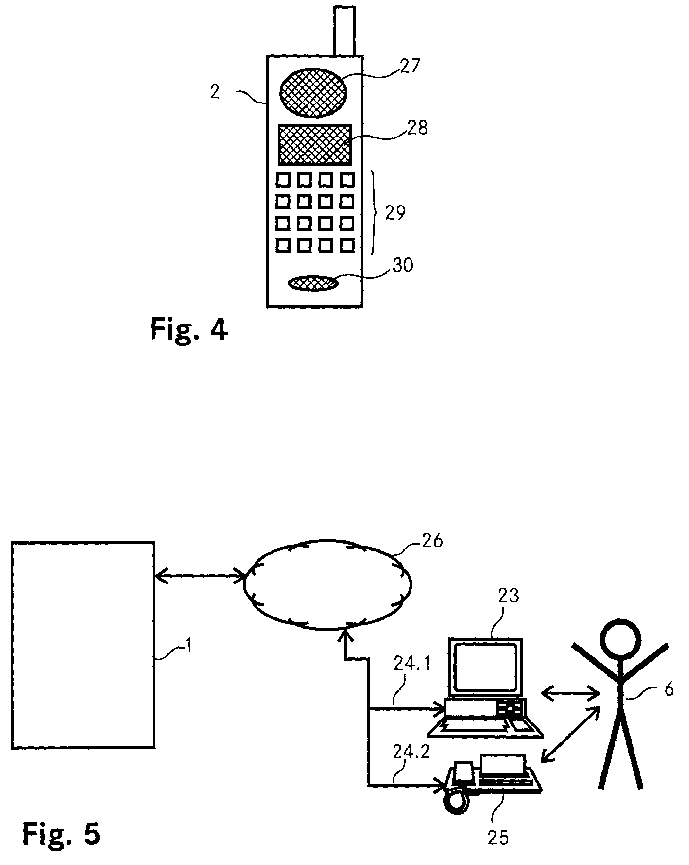

Figur 3 zeigt schematisch den Aufbau des Computersystems 1. Dieses verfügt über eine Sende/Empfangsvorrichtung 19, einen Zufallsgenerator 20, eine Erkennungseinheit 21, eine Benutzerdatenbank 31 sowie Datenbereiche 22, welche vertraulich und damit nicht öffentlich zugänglich sind. Die Sende/Empfangsvorrichtung 19 stellt die Verbindung her zu den jeweiligen Benutzern, welche auf die vertraulichen Datenbereiche 22 zugreifen möchten. Es erfolgt beispielswiese eine drahtgebundene oder drahtlose Anbindung an ein öffentliches Telefon- oder ein anderes Übertragungsnetz 3. Jeder Benutzer, der auf die vertraulichen Datenbereiche 22 zugreifen möchte, muss sich zuerst registrieren lassen. Hierfür wird von jedem Benutzer in der Benutzerdatenbank 31 eine Benutzer-ID sowie beispielsweise eine Sprachprobe (bzw. gewisse Eigenschaften davon) abgespeichert.

Die verschiedenen Einheiten 19 bis 22 sowie 31 sind, beispielsweise über ein Bus-System oder über Punkt-zu-Punkt-Verbindungen, untereinander verbunden, wobei auch zusätzliche, nicht dargestellte Einheiten wie eine Steuerungseinheit oder weitere Speicherbereiche vorhanden sein können.

Meldet sich ein Benutzer mit einem Kommunikationsgerät wie z.B. einem Mobilfunktelefon zwecks Zugriff auf den Datenbereich 22 über eine bereits vorher aufgebaute Verbindung zur Sende/Empfangsvorrichtung 19 beim Computersystem 1 an, veranlasst dieses den Zufallsgenerator 20, eine zufällige Zeichenfolge zu generieren. Diese besteht z.B. aus einer bestimmten Anzahl von Ziffern und Buchstaben und wird über die bestehende oder eine andere Verbindung an den Benutzer bzw. dessen Kommunikationsgerät übermittelt.

Wie bereits beschrieben, wird dem Benutzer die Zeichenfolge bekannt gemacht, woraufhin er sie nachspricht. Die dadurch generierte Sprachsequenz wird wiederum an das Computersystem 1 übermittelt, wo sie von der Sende/Empfangsvorrichtung empfangen und an die Erkennungseinheit 21 weitergeleitet wird. Die Erkennungseinheit 21 besteht aus zwei, beispielsweise in Form von Software realisierten, Modulen, einem Sprechererkennungsmodul 21.1 und einem Texterkennungsmodul 21.2.

Das Sprechererkennungsmodul 21.1 führt eine textunabhängige Sprechererkennung durch, bei welcher der Sprecher, also der Benutzer des Kommunikationsgerätes anhand der übermittelten Sprachsequenz identifiziert wird. Eine Möglichkeit für die textunabhängige Sprechererkennung besteht darin, dass der Benutzer vorgängig einen beliebigen Text (eine Sprachprobe) spricht, welcher vom Computersystem aufgezeichnet und analysiert wird. Das Vorsprechen des Textes dauert zwischen wenigen Sekunden bis wenigen Minuten, vorzugsweise etwa 20 bis 30 Sekunden. Aus diesem gesprochenen Text werden beispielsweise mit einer Frequenzanalyse bestimmte Eigenschaften und/oder Besonderheiten des Sprachspektrums des Benutzers extrahiert und neben der Benutzer-ID in der Benutzerdatenbank 31 abgelegt. Bei der späteren Authentifikation des Benutzers beim Zugriff auf die Datenbereiche 22 erfolgt die gleiche oder eine ähnliche Analyse der übermittelten Sprachsequenz, woraufhin die neu extrahierten Eigenschaften mit den vorgängig extrahierten aus der Benutzerdatenbank 31 verglichen werden. Das Sprechererkennungsmodul 21.1 hat zu diesem Zweck Zugriff auf die Benutzerdatenbank 31. Da das Frequenzspektrum einer Person, ähnlich seinem Fingerabdruck, eindeutige Eigenschaften aufweist, lässt sich ein Benutzer mit dieser Methode eindeutig identifizieren. Der Erkennungsvorgang dauert i.A. nur einige wenige Sekunden.

Der zweite Teil der Benutzer-Authentifikation besteht in der sprecherunabhängigen Texterkennung. D.h. das Texterkennungsmodul 21.2 analysiert die emfpangene Sprachsequenz im Hinblick auf den gesprochenen Text, wozu das Texterkennungsmodul 21.2 Zugriff auf den Zufallsgenerator 20 hat. Bei dieser Analyse wird die Sprachsequenz nicht auf individuelle Eigenschaften des Sprechers hin untersucht, sondern auf bestimmte Eigenschaften des gesprochenen Textes, welche, unabhängig vom jeweiligen Sprecher, für diesen Text charakteristisch sind. Dies wird beispielsweise erreicht, indem man vorgängig eine Vielzahl von Personen den entsprechenden Text oder Teile davon vorsprechen lässt und mit einer Analyse diejenigen Eigenschaften des Textes extrahiert, die bei allen Sprechern vorkommen. Nach diesen Eigenschaften wird später auch bei der Analyse der vom Benutzer übermittelten Sprachsequenz gesucht.

Liefert sowohl das Sprechererkennungsmodul 21.1 als auch das Texterkennungsmodul 21.2 ein positives Resultat, gewährt das Computersystem 1 dem Benutzer den Zugriff auf die vertraulichen Datenbereiche 22. Ein positives Resultat wird vom Sprechererkennungsmodul 21.1 dann geliefert, wenn der Benutzer als derjenige erkannt wird, als den er sich beim Computersystem 1 angemeldet hat. Das Texterkennungsmodul 21.2 liefert dann ein positives Resultat, wenn die aus der empfangenen Sprachsequenz reproduzierte Zeichenfolge mit der an den Benutzer gesendeten Zeichenfolge übereinstimmt.

Figur 4 zeigt eine schematische Detailansicht des Mobilfunktelefons 2 aus Figur 1. Zur Datenausgabe verfügt es neben einem Lautsprecher 27 über ein Display 28, auf welchem beispielsweise die vom Computersystem übertragene Zeichenfolge dargestellt werden kann. Zur Dateneingabe durch den Benutzer weist das Mobilfunktelefon 2 neben einer Tastatur 29 auch ein Mikrofon 30 auf, in welches der Benutzer die auf dem Display 28 dargestellte Zeichenfolge hineinsprechen kann.

In Figur 5 ist eine weitere, mögliche Variante einer Kommunikationsanordnung gezeigt. In diesem Beispiel kommuniziert der Benutzer 6 über einen Computer 23, der über ein (nicht dargestelltes, da im Comuter 23 integriertes) Modem und eine Telefonleitung 24.1 an das Internet 26 angeschlossen ist mit dem Computersystem 1. Der Computer 23 dient zur Datenübermittlung zwischen Benutzer 6 und Computersystem 1. Weiter verfügt der Benutzer 6 über ein Telefon 25, das ebenfalls über eine Telefonleitung 24.2 an das Internet 26 angeschlossen ist. Das Telefon 25 verwendet der Benutzer 6 beispielsweise zur Übermittlung der Sprachsequenz an das Computersystem 1, indem er die vom Computersystem 1 empfangene und auf dem Bildschirm seines Computers 23 angezeigte Zeichenfolge in das Mikrofon des Telefons 25 nachspricht.

Zusammenfassend ist festzustellen, dass die Erfindung eine einfache und sichere Methode bietet, wie ein Benutzer von einem insbesondere mobilen Kommunikationsgerät aus auf vertrauliche Daten oder Bereiche eines Computersystems zugreifen oder entsprechende Dienstleistungen dieses Computersystems in Anspruch nehmen kann.

## Patentansprüche

1. Verfahren zur Authentifizierung eines Benutzers eines Kommunikationsgerätes (2) für einen Zugriff auf vertrauliche Daten bzw. Bereiche (22) einer Datenverarbeitungsvorrichtung (1), **dadurch gekennzeichnet, dass** die Datenverarbeitungsvorrichtung eine zufällige Zeichenfolge (10) generiert, diese über einen beliebigen Übermittlungskanal (8) an den Benutzer (6) übermittelt, der Benutzer mit dem Kommunikationsgerät eine Verbindung (8) zur Datenverarbeitungsvorrichtung aufbaut, durch Nachsprechen der von der Datenverarbeitungsvorrichtung erhaltenen Zeichenfolge eine Sprachsequenz (14) generiert, diese über die Verbindung zur Datenverarbeitungsvorrichtung übermittelt und die Datenverarbeitungsvorrichtung den Benutzer anhand der übermittelten Sprachsequenz authentifiziert (15.1, 15.2).

2. Verfahren nach Anspruch 1, **dadurch gekennzeichnet, dass** die Datenverarbeitungsvorrichtung die zufällige Zeichenfolge über die vom Benutzer aufgebaute Verbindung zum Benutzer übermittelt.

3. Verfahren nach Anspruch 1 oder 2, **dadurch gekennzeichnet, dass** die Datenverarbeitungsvorrichtung zur Authentifizierung des Benutzers anhand der übermittelten Sprachsequenz eine textunabhängige Sprechererkennung (15.1) durchführt.

4. Verfahren nach einem der Ansprüche 1 bis 3, **dadurch gekennzeichnet, dass** die Datenverarbeitungsvorrichtung zur Authentifizierung des Benutzers anhand der übermittelten Sprachsequenz eine sprecherunabhängige Texterkennung (15.2) durchführt

5. Verfahren nach den Ansprüchen 3 und 4, **dadurch gekennzeichnet, dass** die Datenverarbeitungsvorrichtung dem Benutzer den Zugriff auf die vertraulichen Daten bzw. Bereiche gewährt, wenn der Benutzer durch die textunabhängige Sprechererkennung und die Zeichenfolge durch die sprecherunabhängige Texterkennung erkannt wird.

6. Verfahren nach einem der Ansprüche 1 bis 5, **dadurch gekennzeichnet, dass** die Verbindung vom Kommunikationsgerät zur Datenverarbeitungsvorrichtung über ein unsicheres Netzwerk (3), insbesondere eine WAP-Verbindung über das Internet, hergestellt wird.

7. Verfahren nach einem der Ansprüche 1 bis 6, **dadurch gekennzeichnet, dass** sich der Benutzer mit einem auf einem public-key Verfahren basierenden Anmeldeverfahren oder mit einer Kennung mit oder ohne zugehörigem Passwort bei der Datenverarbeitungsvorrichtung anmeldet.

8. Verfahren nach einem der Ansprüche 1 bis 7, **dadurch gekennzeichnet, dass** die Verbindung und/oder der Übertragungskanal mit einem, insbesondere auf einem public-key Verfahren basierenden, Verschlüsselungsverfahren gesichert werden.

9. Kommunikationsanordnung, umfassend eine Datenverarbeitungsvorrichtung sowie zumindest ein Kommunikationsgerät, **dadurch gekennzeichnet, dass** eine von der Datenverarbeitungsvorrichtung generierte, zufällige Zeichenfolge zum Kommunikationsgerät übermittelt und auf dem Kommunikationsgerät optisch oder akustisch ausgegeben werden kann, wobei eine durch den Benutzer durch Nachsprechen der Zeichenfolge erzeugte Sprachsequenz vom Kommunikationsgerät an die Datenverarbeitungsvorrichtung übermittelbar und der Benutzer von der Datenverarbeitungsvorrichtung anhand der übermittelten Sprachsequenz für einen Zugriff auf vertrauliche Daten bzw. Bereiche der Datenverarbeitungsvorrichtung authentifizierbar ist.

10. Datenverarbeitungsvorrichtung zur Authentifizierung eines Benutzers eines Kommunikationsgerätes für einen Zugriff auf vertrauliche Daten bzw. Bereiche der Datenverarbeitungsvorrichtung, **dadurch gekennzeichnet, dass** die Datenverarbeitungsvorrichtung einen Zufallsgenerator (20) zur Generierung einer zufälligen Zeichenfolge, eine Sendervorrichtung (19) zur Übermittlung der Zeichenfolge an den Benutzer, eine Empfängervorrichtung (19) zum Empfangen einer vom Benutzer mit dem Kommunikationsgerät ausgesendeten Sprachsequenz sowie eine Erkennungsvorrichtung (21) zur Authentifizierung des Benutzers anhand der empfangenen Sprachsequenz aufweist.

11. Datenverarbeitungsvorrichtung nach Anspruch 10, **dadurch gekennzeichnet, dass** die Erkennungsvorrichtung ein Sprechererkennungsmodul (21.1) zur Durchführung einer textunabhängigen Sprechererkennung und ein Texterkennungsmodul (21.2) zur Durchführung einer sprecherunabhängigen Texterkennung umfasst.

12. Kommunikationsgerät mit einer Ausgabeeinheit (28) für eine Kommunikationsanordnung nach Anspruch 9, **dadurch gekennzeichnet, dass** das Kommunikationsgerät derart ausgebildet ist, dass während einer bestehenden Verbindung zur Datenverarbeitungsvorrichtung Daten von der Datenverarbeitungsvorrichtung empfangen und auf der Ausgabeeinheit ausgegeben werden können.

13. Kommunikationsgerät nach Anspruch 12, **dadurch gekennzeichnet, dass** es als mobiles Funkgerät, insbesondere als Mobilfunktelefon, ausgebildet ist und eine Sendervorrichtung, ein Mikrofon (30), ein Display (28) sowie einen Lautsprecher (27) umfasst, wobei die von der Datenverarbeitungsvorrichtung empfangenen Daten auf dem Display und/oder über den Lautsprecher ausgegeben werden können sowie eine von einem Benutzer des Kommunikationsgerätes durch Nachsprechen der empfangenen Daten in das Mikrofon erzeugte Sprachsequenz mit der Sendervorrichtung an das Datenverarbeitungsgerät übermittelbar ist.
